# EUROPÄISCHE PATENTSCHRIFT

(11) **EP 2 799 751 B1**
(45) Veröffentlichungstag und Bekanntmachung des Hinweises auf die Patenterteilung: **18.10.2017**
(21) Anmeldenummer: 14165770.0
(22) Anmeldetag: 24.04.2014
(51) Int. Cl.: F02B 33/44, F02M 35/10, F16L 37/14

(54) **Fluidleitungskupplung**
Fluid line coupling
Raccord de conduite de fluide

(30) Priorität: 03.05.2013 DE 102013208187
(43) Veröffentlichungstag der Anmeldung: 05.11.2014
(73) Patentinhaber: Mahle International GmbH, 70376 Stuttgart (DE)
(72) Erfinder: Pröttel, Thomas, 73728 Esslingen (DE); Seitz, Eduard, 73066 Uhingen (DE)
(74) Vertreter: BRP Renaud & Partner mbB Rechtsanwälte Patentanwälte Steuerberater

(56) Entgegenhaltungen:
- EP-A1- 2 431 515
- DE-A1-102004 012 870
- DE-U1- 20 014 909
- DE-U1-202005 019 175
- DE-U1-202011 107 042

## Beschreibung

Die vorliegende Erfindung betrifft eine Fluidleitungskupplung zum mechanischen und fluidischen Kuppeln eines fluidführenden ersten Bauteils mit einem fluidführenden zweiten Bauteil, mit den Merkmalen des Oberbegriffs des Anspruchs 1. Die Erfindung betrifft außerdem eine Aufladeeinrichtung, die mittels einer derartigen Fluidleitungskupplung an eine Frischluftleitung einer Frischluftanlage einer Brennkraftmaschine anschließbar ist. Schließlich betrifft die vorliegende Erfindung noch eine Frischluftleitung einer Frischluftanlage einer Brennkraftmaschine, die mittels einer derartigen Fluidleitungskupplung an eine andere fluidführende Komponente anschließbar ist.

In vielen Bereichen der Technik ist es erforderlich, ein erstes fluidführendes Bauteil mit einem zweiten fluidführenden Bauteil fluidisch und mechanisch zu verbinden. Um dies einfach realisieren zu können, kann eine Fluidleitungskupplung verwendet werden. Insbesondere bei Brennkraftmaschinen, vorzugsweise in Kraftfahrzeugen, können derartige Fluidleitungskupplungen zur Anwendung kommen, beispielsweise um fluidführende Leitungen miteinander oder an Komponenten anschließen zu können, denen ein Fluid zugeführt werden muss oder von denen ein Fluid abgeführt werden muss. Denkbar sind derartige Fluidleitungskupplungen beispielsweise innerhalb eines Kühlkreises. Besonders vorteilhaft lassen sich derartige Fluidleitungskupplungen jedoch im Bereich einer Frischluftanlage nutzen. Besonders geeignet ist eine derartige Fluidleitungskupplung im Bereich einer Ladeeinrichtung, insbesondere eines Abgasturboladers, um eine Frischluftleitung an einen Einlass der Ladeeinrichtung und/oder um eine Frischluftleitung an einen Auslass der Ladeeinrichtung anzuschließen.

Damit eine derartige Fluidleitungskupplung im Rahmen einer Serienmontage verwendbar ist, muss sie vergleichsweise einfach handhabbar sein. Außerdem sollte sie auch für schlecht zugängliche oder schlecht einsehbare Bereiche verwendbar sein, so dass sie insbesondere blind und/oder werkzeuglos montierbar ist. Des Weiteren sollte eine derartige Fluidleitungskupplung wieder vergleichsweise leicht demontierbar sein bzw. trennbar sein, ebenfalls vorzugsweise blind und/oder werkzeuglos.

Ein gattungsgemäße Fluidleitungskupplung ist aus der EP 2 431 515 A1 bekannt. Sie umfasst einen Rohrkörper, den das erste Bauteil aufweist oder der am ersten Bauteil anbringbar ist, einen koaxial in den Rohrkörper einsteckbaren Stutzen, den das zweite Bauteil aufweist oder der am zweiten Bauteil anbringbar ist, und eine Sicherungsklammer, die außen am Rohrkörper angeordnet ist, die den Rohrkörper in einer Umfangsrichtung über mehr als 180° umschließt und die zwischen einer Sicherungsstellung, in welcher der in den Rohrkörper eingesteckte Stutzen nicht aus dem Rohrkörper herausziehbar ist, und einer Entsicherungsstellung, in welcher der in den Rohrkörper eingesteckte Stutzen aus dem Rohrkörper herausziehbar ist, relativ zum Rohrkörper radial verstellbar ist, wobei der Stutzen an seiner Außenseite eine Sicherungsnut aufweist, die sich in der Umfangsrichtung erstreckt, wobei der Rohrkörper einen Sicherungsschlitz aufweist, der sich in der Umfangsrichtung erstreckt und der bei in den Rohrkörper eingestecktem Stutzen radial zur Sicherungsnut fluchtet, und wobei die Sicherungsklammer an ihrer Innenseite einen radial nach innen abstehenden Sicherungssteg aufweist, der sich in der Umfangsrichtung erstreckt, der in der Sicherungsstellung durch den Sicherungsschlitz hindurch radial in die Sicherungsnut eingreift und der in der Entsicherungsstellung nicht radial in die Sicherungsnut eingreift.

Andere Fluidleitungskupplungen sind aus DE 200 14 909 U1, DE 20 2005 019 175 U1, DE 10 2004 012 870 A1 und DE 20 2011 107 042 U1 bekannt.

Die vorliegende Erfindung beschäftigt sich mit dem Problem, für eine derartige Fluidleitungskupplung eine verbesserte Ausführungsform anzugeben, die sich durch eine hohe Zuverlässigkeit, durch eine einfache Handhabung und durch eine preiswerte Herstellbarkeit auszeichnet.

Dieses Problem wird erfindungsgemäß durch den Gegenstand des unabhängigen Anspruchs gelöst. Vorteilhafte Ausführungsformen sind Gegenstand der abhängigen Ansprüche.

Die Erfindung beruht auf dem allgemeinen Gedanken, die Fluidleitungskupplung mit einem Rohrkörper, einem damit steckbaren Stutzen und mit einer Sicherungsklammer auszustatten, wobei der Stutzen in den Rohrkörper einsteckbar ist, während die Sicherungsklammer außen am Rohrkörper angeordnet und zwischen einer Sicherungsstellung und einer Entsicherungsstellung relativ zum Rohrkörper radial verstellbar ist. Dabei bilden Stutzen, Rohrkörper und Sicherungsklammer drei separate Bauteile. In der Entsicherungsstellung ist der in den Rohrkörper eingesteckte Stutzen aus dem Rohrkörper herausziehbar. In der Sicherungsstellung ist der in den Rohrkörper eingesteckte Stutzen dagegen nicht aus dem Rohrkörper herausziehbar. Dabei ist klar, dass zum Herausziehen nur übliche Zugkräfte aufgebracht werden sollen, die unterhalb einer Versagensgrenze der beteiligten Bauteile liegen. Mit anderen Worten, in der Entsicherungsstellung lässt sich der Stutzen zerstörungsfrei aus dem Rohrkörper herausziehen, während dies in der Sicherungsstellung nicht möglich ist. Unter Aufwendung überhöhter Missbrauchskräfte führt ein Herausziehen des Stutzens aus dem Rohrkörper in der Sicherungsstellung der Sicherungsklammer zwangsläufig zu einer Zerstörung oder Beschädigung zumindest eines der drei Bauteile. Während sich der Stutzen nur in der Entsicherungsstellung der Sicherungsklammer zerstörungsfrei aus dem Rohrkörper herausziehen lässt, kann gemäß einer bevorzugten Ausführungsform vorgesehen sein, dass sich der Stutzen immer in den Rohrkörper einstecken lässt, unabhängig davon, ob die Sicherungsklammer ihre Sicherungsstellung oder ihre Entsicherungsstellung einnimmt. Bei in die Sicherungsstellung verstellter Sicherungsklammer kann das Einstecken des Stutzens in den Rohrkörper ein radiales Verdrängen der Sicherungsklammer relativ zum Rohrkörper bewirken, was entgegen der Federkräfte der Sicherungsklammer erfolgt, so dass die Sicherungsklammer quasi elastisch gespannt wird. Erreicht dann der Stutzen die vorgesehene Eindringposition im Rohrkörper, kann die Sicherungsklammer angetrieben durch ihre Rückstellfederkraft radial zurückfedern und sich selbsttätig in ihre Sicherungsstellung bewegen. Hierdurch kann die Montage erheblich vereinfacht werden.

Im Einzelnen ist vorgesehen, dass der Rohrkörper am ersten Bauteil anbringbar ist oder am ersten Bauteil vorhanden ist, während der Stutzen am zweiten Bauteil anbringbar ist oder daran vorhanden ist. Die Sicherungsklammer umschließt den Rohrkörper in einer Umfangsrichtung über mehr als 180°, so dass sie in der Sicherungsstellung selbstsichernd am Rohrkörper festgelegt ist bzw. damit verklammert ist. Zur Realisierung der Sicherungsstellung und der Entsicherungsstellung weist der Stutzen an seiner radial außen liegenden Außenseite eine Sicherungsnut auf, die sich in der Umfangsrichtung erstreckt. Der Rohrkörper ist mit einem Sicherungsschlitz ausgestattet, der sich in der Umfangsrichtung erstreckt und der bei in den Rohrkörper eingestecktem Stutzen radial zur Sicherungsnut des Stutzens fluchtet. Während die Sicherungsnut eine zylindrische Wand des Stutzens in der Regel nicht durchdringt, durchsetzt der Sicherungsschlitz eine zylindrische Wand des Rohrkörpers radial. Die Sicherungsklammer besitzt nun an ihrer radial innen liegenden Innenseite einen radial nach innen abstehenden Sicherungssteg, der sich in der Umfangsrichtung erstreckt und der in der Sicherungsstellung durch den Sicherungsschlitz hindurch radial in die Sicherungsnut eingreift. Zum Überführen der Sicherungsklammer von ihrer Sicherungsstellung in ihre Entsicherungsstellung wird sie relativ zum Rohrkörper radial nach außen verstellt, so weit, dass der Sicherungssteg in der Entsicherungsstellung nicht mehr radial in die Sicherungsnut eingreift. Durch den radialen Eingriff des Sicherungsstegs in die Sicherungsnut ergibt sich ein axialer Formschluss, der den Stutzen an der Sicherungsklammer axial fixiert. Durch den Eingriff des Sicherungsstegs in den Sicherungsschlitz ergibt sich außerdem ein axialer Formschluss, der die Sicherungsklammer am Rohrkörper axial fixiert, so dass letztlich über die Sicherungsklammer auch der Stutzen am Rohrkörper formschlüssig in der Axialrichtung fixiert ist. Durch Herausziehen des Sicherungsstegs aus der Sicherungsnut wird nur der Stutzen relativ zur Sicherungsklammer und somit relativ zum Rohrkörper freigegeben, während die Sicherungsklammer am Rohrkörper zumindest in der Axialrichtung fixiert bleibt. Die hier vorgestellte Fluidleitungskupplung lässt sich einfach handhaben, da lediglich die Sicherungsklammer radial gegenüber dem Rohrkörper verstellt werden muss.

Entsprechend einer vorteilhaften Ausführungsform kann der Sicherungssteg auch in der Entsicherungsstellung im Sicherungsschlitz angeordnet sein. Auf diese Weise kann auch in der Entsicherungsstellung eine vorbestimmte axiale Relativlage zwischen Sicherungsklammer und Rohrkörper beibehalten werden, was die Montage vereinfacht. Somit verbleibt die Sicherungsklammer auch in der Entsicherungsstellung am Rohrkörper.

Bei einer anderen Ausführungsform kann sich der Sicherungssteg ausgehend von einer Längsmittelebene in der Umfangsrichtung beidseitig über mehr als 90° erstrecken, wobei eine radial gemessene Steghöhe in Stegendabschnitten, die über die 90° hinausgehen, reduziert ist oder in Richtung eines Stegendes abnimmt. Durch diese Bauweise wird erreicht, dass der Sicherungssteg in der Entsicherungsstellung im Bereich seiner Stegendabschnitte, die von der Längsmittelebene den über die 90° hinausgehenden Bereich des Sicherungsstegs bilden, radial nicht mehr bis in die Sicherungsnut vorstehen kann und insbesondere innerhalb des Sicherungsschlitzes verbleibt. Auf diese Weise ist gewährleistet, dass der Stutzen in der Entsicherungsstellung bei einer einfachen Geometrie der Sicherungsklammer aus dem Rohrkörper herausziehbar ist. Eine abnehmende Steghöhe kann beispielsweise dadurch erreicht werden, dass im Bereich der Stegendabschnitte ein Innenradius an einen radial innen liegenden Innenrand des Sicherungsstegs im Bereich der Stegendabschnitte größer ist als in den Bereichen bis zu den 90° ausgehend von der Längsmittelebene. Ebenso ist es möglich, im Bereich der Stegendabschnitte einen geradlinigen Verlauf für den Steginnenrand vorzusehen und diesen insbesondere so zu orientieren, dass sich der jeweilige Innenrand in der Entsicherungsstellung parallel zur radialen Verstellrichtung der Sicherungsklammer erstreckt.

Entsprechend einer anderen vorteilhaften Ausführungsform kann der Stutzen an seiner Außenseite eine sich in der Umfangsrichtung erstreckende Einführkontur aufweisen, die beispielsweise als Fase oder Einführschräge oder dergleichen ausgestaltet sein kann. Die Sicherungsklammer ist zweckmäßig radial federelastisch ausgestaltet, derart, dass der Stutzen bei in die Sicherungsstellung verstellter Sicherungsklammer in den Rohrkörper einsteckbar ist. Mit anderen Worten, die hier vorgestellte Fluidleitungskupplung ermöglicht ein Einstecken des Stutzens in den Rohrkörper bei in die Sicherungsstellung verstellter Sicherungsklammer, wodurch gleichzeitig bei Erreichen der vorgesehenen Einsteckposition automatisch die Sicherung des Stutzens im Rohrkörper erfolgt. Im Einzelnen kann der Sicherungssteg beim Einstecken des Stutzens in den Rohrkörper vor Erreichen einer vorbestimmten Einstecktiefe durch die Einführkontur des Stutzens radial nach außen verdrängt werden, so dass er bei Erreichen der vorbestimmten Einstecktiefe selbsttätig in die Sicherungsnut einrastet. Erreicht wird dies durch eine geeignete Abstimmung der Einführkontur auf den Sicherungssteg in Verbindung mit der Federelastizität der Sicherungsklammer, so dass der Stutzen beim Einstecken die Sicherungsklammer soweit aufweiten kann, dass er axial am Sicherungssteg vorbeiführbar ist, bis dieser aufgrund der Federkraft der Sicherungsklammer selbsttätig in die Sicherungsnut eingreift. Diese Maßnahme führt zu einer extremen Vereinfachung der Montage.

Bei einer anderen Ausführungsform kann der Rohrkörper an seiner Außenseite zwei Ausrastkerben aufweisen, die sich axial erstrecken und in die je ein Umfangsende der Sicherungsklammer in deren Entsicherungsstellung radial eingreift. Beim Überführen der Sicherungsklammer von ihrer Sicherungsstellung in ihre Entsicherungsstellung wird diese elastisch aufgeweitet, so dass die Umfangsenden vorgespannt in die Ausrastkerben radial eingreifen und dadurch eine Positionierung der Sicherungsklammer relativ zum Rohrkörper bewirken. Mit anderen Worten, mit Hilfe der Ausrastkerben kann die Sicherungsklammer selbsttätig in der Entsicherungsstellung am Rohrkörper gehalten sein, was ebenfalls die Montage sowie die Demontage erleichtert. Die Verrastung zwischen den Umfangsenden und den Ausrastkerben kann durch leichten Druck auf die Sicherungsklammer überwunden werden, so dass die Sicherungsklammer angetrieben durch ihre Federelastizität selbsttätig in ihre Sicherungsstellung zurück schnappt.

Bei einer anderen vorteilhaften Ausführungsform kann der Sicherungssteg in der Umfangsrichtung wenigstens eine Stegunterbrechung oder wenigstens einen radialen Stegschlitz aufweisen. Hierdurch kann die gewünschte radiale Elastizität der Sicherungsklammer eingestellt werden. Während eine Stegunterbrechung sich über die gesamte radiale Höhe des Sicherungsstegs erstreckt, unterbricht ein Stegschlitz den Sicherungssteg nur über einen Teil seiner gesamten radialen Höhe.

Zweckmäßig können mehrere derartige Stegunterbrechungen bzw. Stegschlitze vorgesehen sein, die in der Umfangsrichtung, vorzugsweise symmetrisch, verteilt sind. Alternativ dazu kann auch vorgesehen sein, dass nur eine einzige Stegunterbrechung bzw. nur ein einziger Stegschlitz vorgesehen ist, die bzw. der sich dann im Bereich der Längsmittelebene der Sicherungsklammer bzw. des Sicherungsstegs befindet.

Bei einer anderen vorteilhaften Ausführungsform kann der Sicherungsschlitz eine Schlitzunterbrechung aufweisen, die mittig zwischen Umfangsenden des Sicherungsschlitzes angeordnet ist. Komplementär dazu kann dann der Sicherungssteg eine Stegunterbrechung aufweisen, derart, dass die Schlitzunterbrechung zur Ausbildung einer Verdrehsicherung zwischen Sicherungsklammer und Rohrkörper radial in die Stegunterbrechung eingreift. Durch die auf diese Weise realisierte Verdrehsicherung zwischen Sicherungsklammer und Rohrkörper lässt sich die Sicherungsklammer zuverlässig zwischen der Sicherungsstellung und der Entsicherungsstellung verstellen.

Erfindungsgemäß weist der Rohrkörper an seiner Außenseite wenigstens eine Führungsnut auf, die sich in der Umfangsrichtung erstreckt. Komplementär dazu weist die Sicherungsklammer an ihrer Innenseite wenigstens einen radial nach innen abstehenden Führungssteg auf, der sich ebenfalls in der Umfangsrichtung erstreckt und der zumindest in der Sicherungsstellung in die zugehörige Führungsnut radial eingreift. Mit Hilfe der Führungsnut und des darin eingreifenden Führungsstegs wird ein zusätzlicher axialer Formschluss zwischen Sicherungsklammer und Rohrkörper realisiert, der die axiale Fixierung zwischen Sicherungsklammer und Rohrkörper verbessert.

Bei einer anderen vorteilhaften Ausführungsform kann wenigstens eine sich in der Umfangsrichtung geschlossen erstreckende Radialdichtung zwischen einer Innenseite des Rohrkörpers und der Außenseite des Stutzens vorgesehen sein. Hierdurch kann die Fluidleitungskupplung nach außen gegen das zu leitende Fluid abgedichtet werden. Eine derartige Radialdichtung kann dabei in eine Umfangsnut eingelegt sein, die grundsätzlich an der Innenseite des Rohrkörpers, bevorzugt jedoch an der Außenseite des Stutzens angeordnet sein kann.

Entsprechend einer vorteilhaften Weiterbildung kann der Rohrkörper axial benachbart zu einer solchen Radialdichtung einen sich in der Umfangsrichtung erstreckenden Positionierschlitz aufweisen. Die Sicherungsklammer kann nun an ihrer Innenseite axial beabstandet zum Sicherungssteg einen radial nach innen abstehenden Positioniersteg aufweisen, der sich ebenfalls in der Umfangsrichtung erstreckt und der in der Sicherungsstellung durch den Positionierschlitz hindurch radial über die Innenseite des Rohrkörpers vorsteht und einen Axialanschlag für die Radialdichtung bildet. Durch den Axialanschlag ist die Radialdichtung in der Axialrichtung relativ zum Rohrkörper positioniert. Gleichzeitig bewirkt der in den Positionierschlitz eingreifende Positioniersteg einen axialen Formschluss zur axialen Fixierung der Sicherungsklammer am Rohrkörper.

Bei einer anderen Ausführungsform kann die Sicherungsklammer an ihren Umfangsenden je ein Griffelement zum manuellen Verstellen der Sicherungsklammer in deren Entsicherungsstellung aufweisen. Mit Hilfe derartiger Griffelemente vereinfacht sich die Handhabung der Fluidleitungskupplung, beispielsweise um den Stutzen aus dem Rohrkörper herausziehen zu können. Ein derartiges Griffelement kann insbesondere integral an der Sicherungsklammer ausgeformt sein.

Bei einer anderen vorteilhaften Ausführungsform kann die Fluidleitungskupplung eine Luftleitungskupplung einer Frischluftanlage zum Zuführen von Frischluft zu Brennräumen einer Brennkraftmaschine, insbesondere eines Kraftfahrzeugs sein, und zum mechanischen und fluidischen Kuppeln eines luftführenden ersten Bauteils mit einem luftführenden zweiten Bauteil dienen. Bei einer aufgeladenen Brennkraftmaschine kann sich diese Fluidleitungskupplung auf der Niederdruckseite oder aber auf der Hochdruckseite befinden. Sie kann insbesondere dazu verwendet werden, eine Frischluftleitung einlassseitig oder auslassseitig an einen Verdichter eines Abgasturboladers anzuschließen.

Bei einer anderen vorteilhaften Ausführungsform können sich der Sicherungssteg und der Sicherungsschlitz in der Umfangsrichtung jeweils über weniger als 360° erstrecken, während sich die Sicherungsnut in der Umfangsrichtung über 360°, also vollständig geschlossen umlaufend, erstreckt. Hierdurch ist es möglich, den Sicherungsstutzen in jeder beliebigen Drehlage in den Rohrkörper einzustecken. Ferner ist es möglich, den in den Rohrkörper eingesteckten Stutzen in der Umfangsrichtung relativ zum Rohrkörper zu verdrehen. Sicherungssteg und Sicherungsschlitz erstrecken sich beispielsweise über etwa 270°. Auch die ggf. vorhandene Führungsnut und dazugehörige Führungssteg erstrecken sich ebenso wie der ggf. vorhandene Positionierschlitz und der zugehörige Positioniersteg über weniger als 360° in der Umfangsrichtung, beispielsweise ebenfalls etwa über 270°.

Bei einer anderen vorteilhaften Ausführungsform kann der Rohrkörper integral am ersten Bauteil ausgeformt sein. Zusätzlich oder alternativ kann vorgesehen sein, dass der Stutzen integral am zweiten Bauteil ausgeformt ist. Die integrale Bauweise reduziert die Anzahl zu verbauender Bauteile, was die Handhabung und die Montage erleichtert.

Der Rohrkörper und die Sicherungsklammer können bevorzugt aus Kunststoff hergestellt sein, wobei hier grundsätzlich der gleiche Kunststoff verwendet werden kann. Der Stutzen kann dagegen aus Kunststoff oder aus Metall hergestellt sein. Sofern der Stutzen aus Kunststoff hergestellt ist, kann es sich hierbei bevorzugt um einen faserverstärkten Kunststoff handeln.

Entsprechend einer anderen vorteilhaften Ausführungsform kann das erste Bauteil eine Niederdruckluftleitung einer Frischluftanlage einer aufgeladenen Brennkraftmaschine sein, während das zweite Bauteil ein Verdichtereinlass einer in der Frischluftanlage angeordneten Ladeeinrichtung ist. Alternativ dazu kann das erste Bauteil eine Hochdruckluftleitung einer Frischluftanlage einer aufgeladenen Brennkraftmaschine sein, während das zweite Bauteil dann ein Verdichterauslass einer in der Frischluftanlage angeordneten Ladeeinrichtung ist.

Eine erfindungsgemäße Ladeeinrichtung, bei der es sich insbesondere um einen Abgasturbolader handeln kann und die sich für eine Frischluftanlage einer Brennkraftmaschine eignet, ist mit einem Verdichtereinlass und mit einem Verdichterauslass ausgestattet, wobei der Verdichtereinlass und/oder der Verdichterauslass einen Stutzen einer Fluidleitungskupplung der vorstehend beschriebenen Art aufweist, so dass er mittels einer derartigen Fluidleitungskupplung an eine Niederdruckluftleitung bzw. an eine Hochdruckluftleitung anschließbar ist.

Eine erfindungsgemäße Frischluftleitung einer Frischluftanlage einer Brennkraftmaschine weist an wenigstens einen ihrer Enden einen Rohrkörper einer Fluidleitungskupplung der vorstehend beschriebenen Art auf, so dass diese Frischluftleitung mittels einer derartigen Fluidleitungskupplung an eine andere Komponente der Brennkraftmaschine anschließbar ist.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Komponenten beziehen.

Es zeigen, jeweils schematisch,
- Fig. 1: einen Längsschnitt durch eine Fluidleitungskupplung,
- Fig. 2: einen Längsschnitt wie in Fig. 1, jedoch bei einer anderen Ausführungsform der Fluidleitungskupplung,
- Fig. 3: eine Axialansicht einer Sicherungsklammer der Fluidleitungskupplung,
- Fig. 4: eine Axialansicht wie in Fig. 3, jedoch bei einer anderen Ausführungsform der Sicherungsklammer,
- Fig. 5: ein Querschnitt der Fluidleitungskupplung entsprechend Schnittlinien V in Fig. 2 mit der Sicherungsklammer in einer Sicherungsstellung,
- Fig. 6: ein Querschnitt wie in Fig. 5, jedoch mit der Sicherungsklammer in einer Entsicherungsstellung,
- Fig. 7: ein Längsschnitt wie in Fig. 1, jedoch bei einer anderen Ausführungsform.

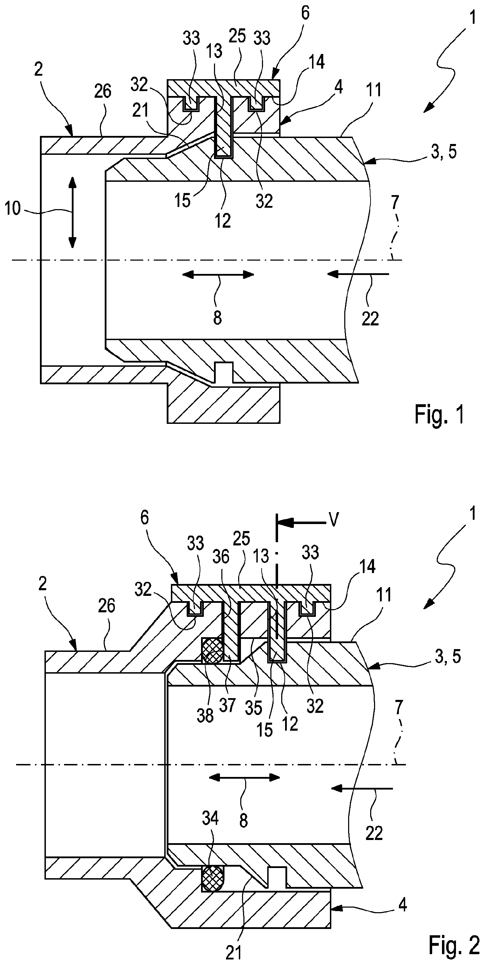

Entsprechend den Figuren 1, 2 und 7 umfasst eine Fluidleitungskupplung 1, mit deren Hilfe ein fluidführendes erstes Bauteil 2 mit einem fluidführenden zweiten Bauteil 3 mechanisch und fluidisch gekoppelt werden kann, einen Rohrkörper 4, einen Stutzen 5 und eine Sicherungsklammer 6. Der Rohrkörper 4 ist bei den hier gezeigten Beispielen integral am ersten Bauteil 2 ausgeformt. Grundsätzlich kann es sich beim Rohrkörper 4 jedoch auch um ein separates Bauteil handeln, das auf geeignete Weise an das erste Bauteil 2 angebaut sein kann. Der Stutzen 5 ist bei der hier gezeigten Ausführungsform integral am zweiten Bauteil 3 ausgeformt. Grundsätzlich ist jedoch auch eine Ausführungsform denkbar, bei welcher der Stutzen 5 ein separates Bauteil ist, das auf geeignete Weise am zweiten Bauteil 3 angebracht sein kann. In jedem Fall ist jedoch die Sicherungsklammer 6 ein separates Bauteil.

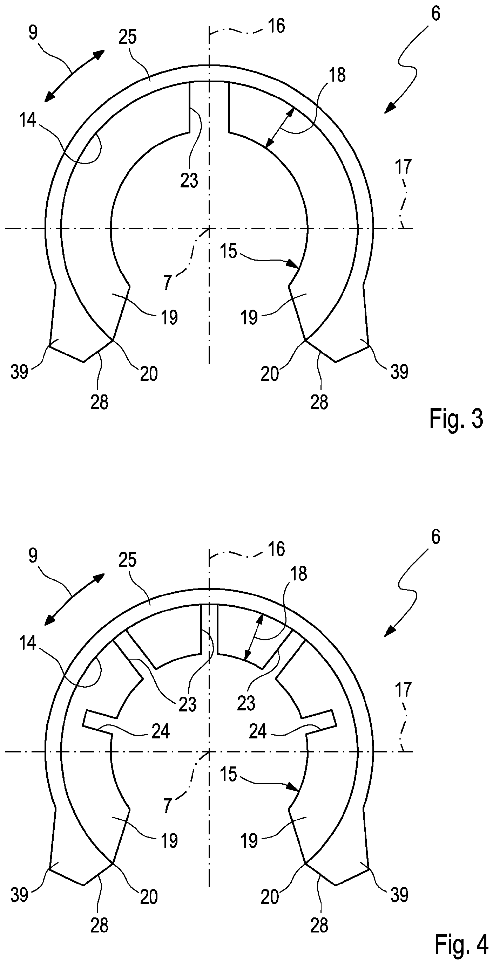

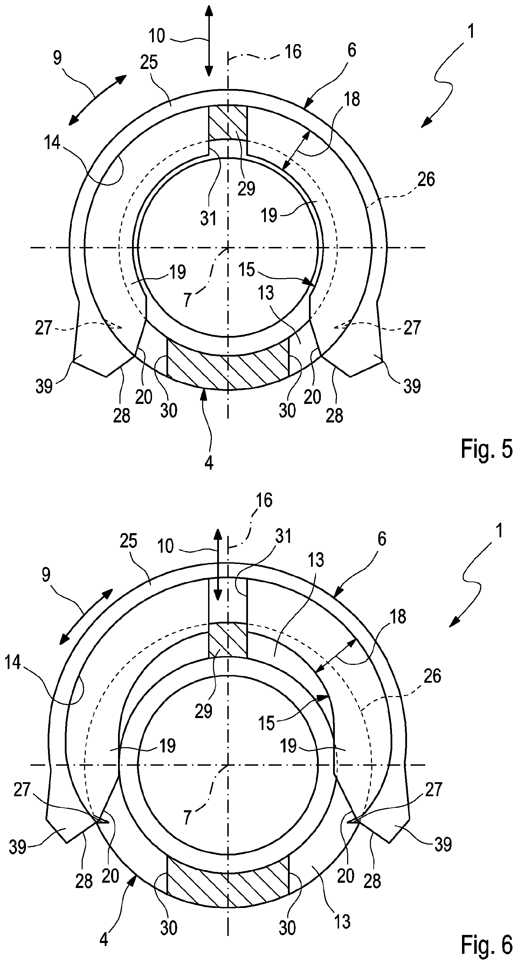

Der Rohrkörper 4 besitzt eine Längsmittelachse 7, die eine parallel zur Längsmittelachse 7 verlaufende Axialrichtung 8 definiert. Der Stutzen 5 ist koaxial in den Rohrkörper 4 einsteckbar und in den Figuren 1 und 2 im eingesteckten Zustand dargestellt. Die Sicherungsklammer 6 ist außen am Rohrkörper 4 angeordnet und umschließt den Rohrkörper 4 in einer in den Figuren 3 bis 6 angedeuteten Umfangsrichtung 9 über mehr als 180°, z.B. über etwa 270°. Die Sicherungsklammer 6 ist bezüglich des Rohrkörpers 4 in einer Radialrichtung 10 zwischen einer in Fig. 5 gezeigten Sicherungsstellung und einer in Fig. 6 gezeigten Entsicherungsstellung verstellbar. In der Sicherungsstellung gemäß Fig. 5, die auch in den Figuren 1 und 2 wiedergegeben ist, ist der in den Rohrkörper 4 eingesteckte Stutzen 5 mit Hilfe der Sicherungsklammer 6 am Rohrkörper 4 gesichert, so dass der Stutzen 5 nicht ohne Zerstörung des Stutzens 5 und/oder der Sicherungsklammer 6 und/oder des Rohrkörpers 4 aus dem Rohrkörper 4 herausziehbar ist. Im Unterschied dazu ist der Stutzen 5 in der Entsicherungsstellung problemlos aus dem Rohrkörper 4 herausziehbar.

Der Stutzen 5 besitzt an seiner radial außen liegenden Außenseite 11 eine Sicherungsnut 12, die sich in der Umfangsrichtung 9 erstreckt. Der Rohrkörper 4 besitzt einen Sicherungsschlitz 13, der sich ebenfalls in der Umfangsrichtung 9 erstreckt und der bei in den Rohrkörper 4 eingestecktem Stutzen 5 radial zur Sicherungsnut 12 fluchtet. Die Sicherungsklammer 6 weist an ihrer radial innen liegenden Innenseite 14 einen radial nach innen abstehenden Sicherungssteg 15 auf, der sich ebenfalls in der Umfangsrichtung 9 erstreckt. In der Sicherungsstellung erstreckt sich der Sicherungssteg 15 durch den Sicherungsschlitz 13 hindurch und greift außerdem radial in die Sicherungsnut 12 ein. In der Entsicherungsstellung dagegen ist der Sicherungssteg 15 radial so weit nach außen verstellt, dass er nicht mehr in die Sicherungsnut 12 radial eingreifen kann. Dieser Zusammenhang ist in den Figuren 5 und 6 wiedergegeben. In der Sicherungsstellung gemäß Fig. 5 greift der Sicherungssteg 15 radial vergleichsweise tief in den Rohrkörper 4 ein. Im Unterschied dazu kann der Sicherungssteg 15 in der Entsicherungsstellung gemäß Fig. 6 radial nicht so tief in den Rohrkörper 4 eingreifen. Zur besseren Übersichtlichkeit ist in den Querschnitten der Figuren 5 und 6 der Stutzen 5 weggelassen. Erkennbar ist, dass der Sicherungssteg 15 auch in der Entsicherungsstellung gemäß Fig. 6 im Sicherungsschlitz 13 angeordnet ist.

Entsprechend Fig. 3 erstreckt sich der Sicherungssteg 15 ausgehend von einer Längsmittelebene 16 der Sicherungsklammer 6 in der Umfangsrichtung 9 beidseitig über mehr als 90°. Eine die Längsmittelebene 16 in der Längsmittelachse 7 schneidende Normalebene 17 deutet die von der Längsmittelebene 16 ausgehenden 90°-Bereiche an. Der Sicherungssteg 15 besitzt eine radial gemessene Steghöhe 18, die in Stegendabschnitten 19, die über die 90°-Bereiche hinausgehen, reduziert ist oder in Richtung eines Stegendes 20 abnimmt. Im Beispiel der Fig. 3 besitzt der Sicherungssteg 15 im jeweiligen Stegendabschnitt 19 ein abgeschrägtes Stegende 20, das einen einzigen, geradlinigen Bereich besitzt. Bei der in den Figuren 5 und 6 gezeigten Ausführungsform ist das jeweilige Stegende 20 zweistufig abgeschrägt. Durch die Reduzierung der Steghöhe 18 im jeweiligen Stegendabschnitt 19 wird erreicht, dass der Sicherungssteg 15 in der Entsicherungsstellung gemäß Fig. 6 nicht mehr in die Sicherungsnut 12 des Stutzens 5 eingreifen kann. Insbesondere kann der Sicherungssteg 15 dann nur noch geringfügig über den Sicherungsschlitz 13 vorstehen, was in Fig. 6 rechts angedeutet ist, oder nicht mehr über den Sicherungsschlitz 13 vorstehen, was in Fig. 6 links dargestellt ist.

Entsprechend den Figuren 1, 2 und 7 kann der Stutzen 5 an seiner Außenseite 11 eine sich in der Umfangsrichtung 9 erstreckende Einführkontur 21 aufweisen, die hier als Konus ausgeführt ist, der sich in einer Einsteckrichtung 22, in welcher der Stutzen 5 in den Rohrkörper 4 einsteckbar ist, verjüngt. Die Sicherungsklammer 6 ist radial federelastisch ausgestaltet, was beispielsweise durch eine entsprechende Materialauswahl realisierbar ist. Zusätzlich oder alternativ können nachfolgend mit Bezug auf die Figuren 3 und 4 näher erläuterte Maßnahmen zur Verbesserung bzw. zur Bereitstellung der gewünschten radialen Federelastizität der Sicherungsklammer 6 verwirklicht sein. Jedenfalls ist die Sicherungsklammer 6 zweckmäßig derart federelastisch konfiguriert, dass der Stutzen 5 bei in die Sicherungsstellung verstellter Sicherungsklammer 6 in den Rohrkörper 4 einsteckbar ist. Dabei trifft die Einführkontur 21 axial auf den radial nach innen vorstehenden Sicherungssteg 15 und bewirkt eine radial nach außen orientierte Verdrängung des Sicherungsstegs 15, was dann entgegen einer Federkraft der Sicherungsklammer 6 erfolgt. Sobald der Stutzen 5 eine vorbestimmte Einstecktiefe im Rohrkörper 4 erreicht, fluchtet die Sicherungsnut 12 mit dem Sicherungssteg 15, wodurch der Sicherungssteg 15 selbsttätig in die Sicherungsnut 12 einrasten kann. Hierbei ist der Sicherungssteg 15 durch die Federkraft der Sicherungsklammer 6 radial nach innen angetrieben.

Wie den Figuren 3 und 4 entnehmbar ist, kann der Sicherungssteg 15 in der Umfangsrichtung 9 zumindest eine Stegunterbrechung 23 aufweisen. Zusätzlich oder alternativ kann der Sicherungssteg 15 gemäß Fig. 4 zumindest einen radialen Stegschlitz 24 aufweisen. Während sich eine derartige Stegunterbrechung 23 über die gesamte radiale Höhe 18 des Sicherungsstegs 15 erstreckt, ist der jeweilige, radial nach innen offene Stegschlitz 24 in der Radialrichtung kleiner dimensioniert als die radiale Höhe 18 des Sicherungsstegs 15. Im Beispiel der Fig. 3 ist eine einzige Stegunterbrechung 23 symmetrisch zur Längsmittelebene 16 positioniert. In Fig. 4 sind mehrere Stegunterbrechungen 23 und außerdem mehrere Stegschlitze 24 vorgesehen, die zweckmäßig symmetrisch zur Längsmittelebene 16 in der Umfangsrichtung 9 verteilt sein können. Die jeweilige Stegunterbrechung 23 bzw. der jeweilige Stegschlitz 24 verschiebt die im Sicherungssteg 15 in der Umfangsrichtung 9 orientierten Kraftflusspfade radial nach außen in einen bandförmigen Grundkörper 25 der Sicherungsklammer 6. Hierdurch wird die radiale Federelastizität der Sicherungsklammer 6 verbessert.

Entsprechend den Figuren 5 und 6 kann der Rohrkörper 4 an seiner radial außen liegenden Außenseite 26 zwei Ausrastkerben 27 aufweisen, die sich jeweils axial, also parallel zur Längsmittelachse 7 erstrecken. Die Ausrastkerben 27 sind an der Außenseite 26 des Rohrkörpers 4 so positioniert, dass in der Entsicherungsstellung der Sicherungsklammer 6 jeweils ein Umfangsende 28 der Sicherungsklammer 6 radial in jeweils eine der Ausrastkerben 27 eingreifen kann, was in Fig. 6 dargestellt ist. Auf diese Weise ist die Sicherungsklammer 6 in der Entsicherungsstellung stabil am Rohrkörper 4 positioniert, wodurch es besonders einfach ist, die Fluidleitungskupplung 1 manuell zu demontieren bzw. die beiden Bauteile 2, 3 voneinander zu entkuppeln.

Bei der in den Figuren 5 und 6 gezeigten Ausführungsform besitzt der Sicherungsschlitz 13 eine Schlitzunterbrechung 29, die zwischen Umfangsenden 30 des Sicherungsschlitzes 13 im Wesentlichen mittig angeordnet ist, also ebenfalls bezüglich der Längsmittelebene 16 mittig angeordnet ist. Der Sicherungssteg 15 besitzt nun komplementär zur Schlitzunterbrechung 29 eine Stegunterbrechung 31, die dementsprechend mittig zwischen Umfangsenden 28 der Sicherungsklammer 6 angeordnet ist. Gemäß den Figuren 5 und 6 greift die Schlitzunterbrechung 29, die am Rohrkörper 4 einen Axialsteg bildet, radial in die Stegunterbrechung 31 ein, wodurch eine Verdrehsicherung zwischen der Sicherungsklammer 6 und dem Rohrkörper 4 gebildet ist.

Gemäß den Figuren 1, 2 und 7 kann der Rohrkörper 2 an seiner Außenseite 26 zumindest eine Führungsnut 32 aufweisen, die sich in der Umfangsrichtung 9 erstreckt. Die Sicherungsklammer 6 weist an ihrer Innenseite 14 komplementär dazu wenigstens einen radial nach innen abstehenden Führungssteg 33 auf. Zumindest in der Sicherungsstellung greift der jeweilige Führungssteg 33 radial in die zugehörige Führungsnut 32 ein. Bei den Beispielen der Figuren 1, 2 und 7 sind jeweils zwei parallel zueinander verlaufende Führungsnuten 32 am Rohrkörper 4 ausgebildet, während komplementär dazu an der Sicherungsklammer 6 zwei parallel zueinander verlaufende Führungsstege 33 vorhanden sind.

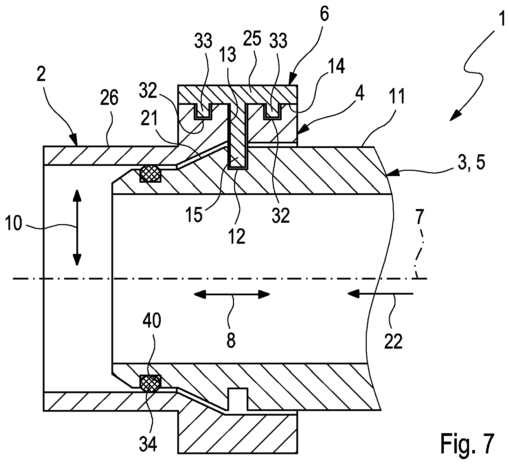

Gemäß den Fig. 2 und 7 kann zumindest eine sich in der Umfangsrichtung 9 geschlossen erstreckende Radialdichtung 34 vorgesehen sein, die beispielsweise mit Hilfe eines O-Rings realisiert sein kann. Die Radialdichtung 34 ist dabei zwischen einer dem Stutzen 5 zugewandten Innenseite 35 des Rohrkörpers 4 und der Außenseite 11 des Stutzens 5 positioniert, um den fluidführenden Innenraum von Stutzen 5 und Rohrkörper 4 gegenüber einer Umgebung der Fluidleitungskupplung 1 abzudichten.

Bei der in Fig. 2 gezeigten, bevorzugten Ausführungsform besitzt der Rohrkörper 4 axial benachbart zur Radialdichtung 34 einen sich in der Umfangsrichtung 9 zusätzlich zum Sicherungsschlitz 13 vorgesehenen Positionierschlitz 36. Die Sicherungsklammer 6 besitzt an ihrer Innenseite 14 zusätzlich zum Sicherungssteg 15 einen sich in der Umfangsrichtung 9 erstreckenden Positioniersteg 37, der radial nach innen absteht. In der Sicherungsstellung erstreckt sich der Positioniersteg 37 radial durch den Positionierschlitz 36 hindurch und steht dabei radial über die Innenseite 35 des Rohrkörpers 4 so weit vor, dass er einen Axialanschlag 38 für die Radialdichtung 34 bildet. Diesem Axialanschlag 38 axial gegenüberliegend ist eine Ringstufe 40 an der Innenseite des Rohrkörpers 2 ausgebildet, an der sich die Radialdichtung 34 ebenfalls axial sowie radial abstützen kann. Der Positionierschlitz 36 erstreckt sich parallel zum Sicherungsschlitz 13. Der Positioniersteg 37 erstreckt sich parallel zum Sicherungssteg 15.

Im Unterschied zu Fig. 2 zeigt Fig. 7 eine Variante der in Fig. 1 gezeigten Ausführungsform, die ebenfalls mit einer Radialdichtung 34 ausgestattet ist. In diesem Fall ist am Stutzen 5 eine in der Umfangsrichtung geschlossen umlaufende Umfangsnut 40 ausgebildet, in welche die Radialdichtung 34 eingesetzt ist. Die radiale Dimensionierung des Sicherungsstegs 15 kann bevorzugt so gewählt sein, dass die Radialdichtung 34 beim Einstecken des Stutzens 5 in den Rohrkörper 2 nicht mit dem Sicherungssteg 15 in Kontakt kommt. Mit anderen Worten, der Außenquerschnitt der in die Umfangsnut 40 eingesetzten Radialdichtung 34 ist kleiner als der Innenquerschnitt des Sicherungsstegs 15.

Gemäß den Figuren 3 bis 6 kann die Sicherungsklammer 6 an ihren Umfangsenden 28 jeweils ein Griffelement 39 aufweisen, mit dessen Hilfe ein manuelles Verstellen der Sicherungsklammer 6 vereinfacht ist. Das jeweilige Griffelement 39 bildet eine radiale Verdickung des Umfangsendes 28. Insbesondere ist das jeweilige Griffelement 39 integral an der Sicherungsklammer 6 ausgeformt.

Wie sich insbesondere den Figuren 5 und 6 entnehmen lässt, erstrecken sich der Sicherungssteg 15 und der Sicherungsschlitz 13 in der Umfangsrichtung 9 jeweils über weniger als 360°, nämlich beispielsweise über etwa 270°. Im Unterschied dazu erstreckt sich die Sicherungsnut 12 gemäß den Figuren 1 und 2 der Umfangsrichtung 9 über 360°, also in der Umfangsrichtung 9 vollständig umlaufend. Somit kann der Stutzen 5 in jeder Drehlage in den Rohrkörper 4 eingesteckt werden.

Zweckmäßig handelt es sich bei der Fluidleitungskupplung 1 um eine Luftleitungskupplung einer Frischluftanlage, mit deren Hilfe Brennräumen einer Brennkraftmaschine, die insbesondere in einem Kraftfahrzeug angeordnet sein kann, Frischluft zugeführt wird. Eine derartige Luftleitungskupplung 1 dient dann zum mechanischen und fluidischem Kuppeln eines luftführenden ersten Bauteils 2 mit einem luftführenden zweiten Bauteil 3. Beim ersten Bauteil 2 kann es sich beispielsweise um eine Niederdruckluftleitung einer Frischluftanlage einer aufgeladenen Brennkraftmaschine handeln, während das zweite Bauteil 3 einen Verdichtereinlass einer in der Frischluftanlage angeordneten Ladeeinrichtung sein kann. Alternativ kann das erste Bauteil 2 auch eine Hochdruckluftleitung einer Frischluftanlage einer aufgeladenen Brennkraftmaschine sein, während dann das zweite Bauteil 3 ein Verdichterauslass einer in der Frischluftanlage angeordneten Ladeeinrichtung sein kann. Insbesondere kann somit das zweite Bauteil 3 durch einen Verdichtereinlass oder durch einen Verdichterauslass eines Verdichters eines Abgasturboladers gebildet sein, der mit dem Stutzen 5 ausgestattet ist. Das erste Bauteil 2 kann somit insbesondere eine Frischluftleitung einer Frischluftanlage einer Brennkraftmaschine sein, die zumindest an einem ihrer Enden einen derartigen Rohrkörper 4 aufweist, beispielsweise um die Frischluftleitung an den vorstehend genannten Verdichtereinlass oder an den vorstehend genannten Verdichterauslass einfach anschließen zu können.

## Patentansprüche

1. Fluidleitungskupplung zum mechanischen und fluidischen Kuppeln eines fluidführenden ersten Bauteils (2) mit einem fluidführenden zweiten Bauteil (3),
- mit einem Rohrkörper (4), den das erste Bauteil (2) aufweist oder der am ersten Bauteil (2) anbringbar ist,
- mit einem koaxial in den Rohrkörper (4) einsteckbaren Stutzen (5), den das zweite Bauteil (3) aufweist oder der am zweiten Bauteil (3) anbringbar ist,
- mit einer Sicherungsklammer (6), die außen am Rohrkörper (4) angeordnet ist, die den Rohrkörper (4) in einer Umfangsrichtung (9) über mehr als 180° umschließt und die zwischen einer Sicherungsstellung, in welcher der in den Rohrkörper (4) eingesteckte Stutzen (5) nicht aus dem Rohrkörper (4) herausziehbar ist, und einer Entsicherungsstellung, in welcher der in den Rohrkörper (4) eingesteckte Stutzen (5) aus dem Rohrkörper (4) herausziehbar ist, relativ zum Rohrkörper (4) radial verstellbar ist,
- wobei der Stutzen (5) an seiner Außenseite (11) eine Sicherungsnut (12) aufweist, die sich in der Umfangsrichtung (9) erstreckt,
- wobei der Rohrkörper (4) einen Sicherungsschlitz (13) aufweist, der sich in der Umfangsrichtung (9) erstreckt und der bei in den Rohrkörper (4) eingestecktem Stutzen (5) radial zur Sicherungsnut (12) fluchtet,
- wobei die Sicherungsklammer (6) an ihrer Innenseite (14) einen radial nach innen abstehenden Sicherungssteg (15) aufweist, der sich in der Umfangsrichtung (9) erstreckt, der in der Sicherungsstellung durch den Sicherungsschlitz (13) hindurch radial in die Sicherungsnut (12) eingreift und der in der Entsicherungsstellung nicht radial in die Sicherungsnut (12) eingreift, **dadurch gekennzeichnet,**
- **dass** der Rohkörper (4) an seiner Außenseite (26) außerdem wenigstens eine Führungsnut (32) aufweist, die sich in der Umfangsrichtung (9) erstreckt,
- **dass** die Sicherungsklammer (6) an ihrer Innenseite (14) außerdem wenigstens einen radial nach innen abstehenden Führungssteg (33) aufweist, der zumindest in der Sicherungsstellung in die zugehörige Führungsnut (32) radial eingreift.

2. Fluidleitungskupplung nach Anspruch 1,
**dadurch gekennzeichnet,**
**dass** der Sicherungssteg (15) auch in der Entsicherungsstellung im Sicherungsschlitz (13) angeordnet ist.

3. Fluidleitungskupplung nach Anspruch 1 oder 2,
**dadurch gekennzeichnet,**
**dass** sich der Sicherungssteg (15) ausgehend von einer Längsmittelebene (16) in der Umfangsrichtung (9) beidseitig über mehr als 90° erstreckt, wobei eine radial gemessene Steghöhe (18) in Stegendabschnitten (19), die über die 90° hinausgehen, reduziert ist oder in Richtung eines Stegendes (20) abnimmt.

4. Fluidleitungskupplung nach einem der Ansprüche 1 bis 3,
**dadurch gekennzeichnet,**
- **dass** der Stutzen (5) an seiner Außenseite (11) eine sich in der Umfangsrichtung (9) erstreckende Einführkontur (21) aufweist,
- **dass** die Sicherungsklammer (6) radial federelastisch ausgestaltet ist, derart, dass der Stutzen (5) bei in die Sicherungsstellung verstellter Sicherungsklammer (6) in den Rohrkörper (4) einsteckbar ist, insbesondere derart, dass der Sicherungssteg (15) beim Einstecken des Stutzens (5) in den Rohrkörper (4) vor Erreichen einer vorbestimmten Einstecktiefe durch die Einführkontur (21) radial nach außen verdrängt wird und bei Erreichen der vorbestimmten Einstecktiefe selbsttätig in die Sicherungsnut (12) einrastet.

5. Fluidleitungskupplung nach einem der Ansprüche 1 bis 4,
**dadurch gekennzeichnet,**
**dass** der Rohrkörper (4) an seiner Außenseite (26) zwei Ausrastkerben (27) aufweist, die sich axial erstrecken und in die je ein Umfangsende (28) der Sicherungsklammer (6) in deren Entsicherungsstellung radial eingreift.

6. Fluidleitungskupplung nach einem der Ansprüche 1 bis 5,
**dadurch gekennzeichnet,**
**dass** der Sicherungssteg (15) in der Umfangsrichtung (9) wenigstens eine Stegunterbrechung (23) oder wenigstens einen radialen Stegschlitz (24) aufweist.

7. Fluidleitungskupplung nach einem der Ansprüche 1 bis 6,
**dadurch gekennzeichnet,**
- **dass** der Sicherungsschlitz (13) eine Schlitzunterbrechung (29) aufweist, die mittig zwischen Umfangsenden (30) des Sicherungsschlitzes (13) angeordnet ist,
- **dass** der Sicherungssteg (15) komplementär zur Schlitzunterbrechung (29) eine Stegunterbrechung (31) aufweist,
- **dass** die Schlitzunterbrechung (29) zur Ausbildung einer Verdrehsicherung zwischen Sicherungsklammer (6) und Rohrkörper (4) radial in die Stegunterbrechung (31) eingreift.

8. Fluidleitungskupplung nach einem der Ansprüche 1 bis 7,
**dadurch gekennzeichnet,**
**dass** wenigstens eine Radialdichtung (34) zwischen einer Innenseite (35) des Rohrkörpers (4) und der Außenseite (11) des Stutzens (5) vorgesehen ist.

9. Fluidleitungskupplung nach Anspruch 8,
**dadurch gekennzeichnet,**
- **dass** der Rohrkörper (4) axial benachbart zu einer solchen Radialdichtung (34) einen sich in der Umfangsrichtung (9) erstreckenden Positionierschlitz (36) aufweist,
- **dass** die Sicherungsklammer (6) an ihrer Innenseite (14) axial beabstandet zum Sicherungssteg (15) einen radial nach innen abstehenden Positioniersteg (37) aufweist, der in der Sicherungsstellung durch den Positionierschlitz (36) hindurch radial über die Innenseite (35) des Rohrkörpers (4) vorsteht und einen Axialanschlag (38) für die Radialdichtung (34) bildet.

10. Fluidleitungskupplung nach einem der Ansprüche 1 bis 9,
**dadurch gekennzeichnet,**
**dass** die Sicherungsklammer (6) an ihren Umfangsenden (28) je ein Griffelement (39) zum manuellen Verstellen der Sicherungsklammer (6) in deren Entsicherungsstellung aufweist.

11. Fluidleitungskupplung nach einem der Ansprüche 1 bis 10,
**dadurch gekennzeichnet,**
**dass** sich der Sicherungssteg (15) und der Sicherungsschlitz (13) in der Umfangsrichtung (9) jeweils über weniger als 360° erstrecken, während sich die Sicherungsnut (12) in der Umfangsrichtung (9) über 360° erstreckt.

12. Fluidleitungskupplung nach einem der Ansprüche 1 bis 11,
**dadurch gekennzeichnet,**
**dass** der Rohrkörper (4) integral am ersten Bauteil (2) ausgeformt ist.

13. Fluidleitungskupplung nach einem der Ansprüche 1 bis 12,
**dadurch gekennzeichnet,**
**dass** der Stutzen (5) integral am zweiten Bauteil (3) ausgeformt ist.

14. Ladeeinrichtung, insbesondere Abgasturbolader, für eine Frischluftanlage einer Brennkraftmaschine, mit einem Verdichtereinlass und mit einem Verdichterauslass, wobei der Verdichtereinlass oder der Verdichterauslass eine Fluidleitungskupplung (1) nach einem der Ansprüche 1 bis 13 aufweist oder wobei der Verdichtereinlass und der Verdichterauslass jeweils eine Fluidleitungskupplung (1) nach einem der Ansprüche 1 bis 13 aufweisen.

15. Frischluftleitung einer Frischluftanlage einer Brennkraftmaschine, die an wenigstens einem ihrer Enden eine Fluidleitungskupplung (1) nach einem der Ansprüche 1 bis 13 aufweist.

## Claims

1. Fluid line coupling for the mechanical and fluidic coupling of a fluid-carrying component (2) to a fluid-carrying second component (3),
- comprising a pipe body (4) which is comprised by the first component (2) or which can be attached to the first component (2),
- comprising a connecting piece (5) which can be inserted coaxially into the pipe body (4), which is comprised by the second component (3) or which can be attached to the second component (3),
- comprising a securing clip (6) which is disposed outside on the pipe body (4), which surrounds the pipe body (4) in a circumferential direction (9) over more than 180° and which is radially adjustable relative to the pipe body (4) between a securing position in which the connecting piece (5) inserted into the pipe body (4) cannot be withdrawn from the pipe body (4) and a releasing position in which the connecting piece (5) inserted into the pipe body (4) can be withdrawn from the pipe body (4),
- wherein the connecting piece (5) has a securing groove (12) on its outer side (11) which extends in the circumferential direction (9),
- wherein the pipe body (4) has a securing slot (13) which extends in the circumferential direction (9) and which is radially in alignment with the securing groove (12) when the connecting piece (5) is inserted in the pipe body (4),
- wherein the securing clip (6) has a radially inwardly projecting securing web (15) on its inner side (14), which extends in the circumferential direction (9) which in the securing position engages through the securing slot (13) radially into the securing groove (12) and which in the releasing position does not engage in the securing groove (12),
**characterized in,**
- **that** the pipe body (4) has on its outer side (26) additionally at least one guide groove (32) which extends in the circumferential direction (9),
- **that** the securing clip (6) has on its inner side (14) additionally at least one radially inwardly projecting guide web (33) which at least in the securing position engages radially in the appurtenant guide groove (32).

2. The fluid line coupling according to claim 1,
**characterized in**
**that** the securing web (15) is also disposed in the securing slot (13) in the releasing position.

3. The fluid line coupling according to claim 1 or 2,
**characterized in,**
**that** the securing web (15) starting from a longitudinal central plane (16) in the circumferential direction (9) extends over more than 90° in the circumferential direction on both sides, wherein a radially measured web height (18) in web end sections (19) which go beyond the 90° is reduced or decreases in the direction of a web end (20).

4. The fluid line coupling according to any one of claims 1 to 3,
**characterized in,**
- **that** on its outer side (11) the connecting piece (5) has an insertion contour (21) extending in the circumferential direction (9),
- **that** the securing clip (6) is configured to be spring-elastic in such a manner that when the securing clip (6) is adjusted in the securing position the connecting piece (5) can be inserted into the pipe body (4), in particular in such a manner that during insertion of the connecting piece (5) into the pipe body (4), before reaching a pre-determined insertion depth the securing web (15) is displaced radially outwards by the insertion contour (21) and on reaching the predetermined insertion depth engages automatically into the securing groove (12).

5. The fluid line coupling according to any one of claims 1 to 4,
**characterized in,**
**that** the pipe body (4) has two disengaging notches (27) on its outer side (26), which extend axially and into which respectively one circumferential end (28) of the securing clip (6) engages radially in its releasing position.

6. The fluid line coupling according to any one of claims 1 to 5,
**characterized in,**
**that** the securing web (15) in the circumferential direction (9) has at least one web discontinuity (23) or at least one radial web slot (24).

7. The fluid line coupling according to any one of claims 1 to 6,
**characterized in,**
- **that** the securing slot (13) has a slot discontinuity (29) which is disposed centrally between circumferential ends (30) of the securing slot (13),
- **that** the securing web (15) has a web discontinuity (31) complementary to the slot discontinuity (29),
- **that** the slot discontinuity (29) engages radially in the web discontinuity (31) to form a rotation prevention between securing clip (6) and pipe body (4).

8. The fluid line coupling according to any one of claims 1 to 7,
**characterized in,**
**that** at least one radial seal (34) is provided between an inner side (35) of the pipe body (4) and the outer side (11) of the connecting piece (5).

9. The fluid line coupling according to claim 8,
**characterized in,**
- **that** the pipe body (4) has a positioning slot (36) extending in the circumfer ential direction (9) axially adjacent to such a radial seal (34),
- **that** on its inner side (14) axially spaced apart from the securing web (15) the securing clip (6) has a radially inwardly projecting positioning web (37) which in the securing position protrudes through the positioning slot (36) radially beyond the inner side (35) of the pipe body (4) and forms an axial stop (38) for the radial seal (34).

10. The fluid line coupling according to any one of claims 1 to 9,
**characterized in,**
**that** at its circumferential ends (28) the securing clip (6) has respectively one grip element (39) for the manual adjustment of the securing clip (6) in its releasing position.

11. The fluid line coupling according to any one of claims 1 to 10,
**characterized in,**
**that** the securing web (15) and the securing slot (13) each extend in the circumferential direction (9) over less than 360° whereas the securing groove (12) extends in the circumferential direction (9) over 360°.

12. The fluid line coupling according to any one of claims 1 to 11,
**characterized in,**
**that** the pipe body (4) is formed integrally on the first component (2).

13. The fluid line coupling according to any one of claims 1 to 12,
**characterized in,**
**that** the connecting piece (5) is formed integrally on the second component (3).

14. Charging device, in particular exhaust gas turbocharger for a fresh air system of an internal combustion engine comprising a compressor inlet and a compressor outlet, wherein the compressor inlet or the compressor outlet comprises a fluid line coupling (1) according to any one of claims 1 to 13 or wherein the compressor inlet and the compressor outlet each comprise a fluid line coupling (1) according to one of claims 1 to 13.

15. Fresh air line of a fresh air system of an internal combustion engine which has on at least one of its ends a fluid line coupling (1) according to any one of claims 1 to 13.

## Revendications

1. Raccord de conduite fluidique servant à coupler de manière mécanique et fluidique un premier composant (2) de guidage de fluide à un deuxième composant (3) de guidage de fluide,
- avec un corps tubulaire (4), que le premier composant (2) présente ou qui peut être installé au niveau du premier composant (2),
- avec une tubulure (5) pouvant être emboîtée de manière coaxiale dans le corps tubulaire (4), que le deuxième composant (3) présente ou qui peut être installée au niveau du deuxième composant (3),
- avec une attache de blocage (6), qui est disposée côté extérieur au niveau du corps tubulaire (4), qui entoure le corps tubulaire (4) dans une direction périphérique (9) sur plus de 180° et qui peut être ajustée de manière radiale par rapport au corps tubulaire (4) entre une position de blocage, dans laquelle la tubulure (5) emboîtée dans le corps tubulaire (4) ne peut pas être retirée du corps tubulaire (4), et une position de déblocage, dans laquelle la tubulure (5) emboîtée dans le corps tubulaire (4) peut être retirée du corps tubulaire (4),
- dans lequel la tubulure (5) présente au niveau de son côté extérieur (11) une rainure de blocage (12), qui s'étend dans la direction périphérique (9),
- dans lequel le corps tubulaire (4) présente une entaille de blocage (13), qui s'étend dans la direction périphérique (9) et qui est en alignement radial par rapport à la rainure de blocage (12) lorsque la tubulure (5) est emboîtée dans le corps tubulaire (4),
- dans lequel l'attache de blocage (6) présente au niveau de son côté intérieur (14) une entretoise de blocage (15) dépassant de manière radiale vers l'intérieur, qui s'étend dans la direction périphérique (9), qui vient en prise de manière radiale, dans la position de blocage, avec la rainure de blocage (12) à travers l'entaille de blocage (13) et qui ne vient pas en prise de manière radiale, dans la position de déblocage, avec la rainure de blocage (12),
**caractérisé en ce**
- **que** le corps tubulaire (4) présente au niveau de son côté extérieur (26) par ailleurs au moins une rainure de guidage (32), qui s'étend dans la direction périphérique (9),
- **que** l'attache de blocage (6) présente au niveau de son côté intérieur (14) par ailleurs au moins une entretoise de guidage (33) dépassant de manière radiale vers l'intérieur, laquelle vient en prise de manière radiale, au moins dans la position de blocage, avec la rainure de guidage (32) associée.

2. Raccord de conduite fluidique selon la revendication 1,
**caractérisé en ce**
**que** l'entretoise de blocage (15) est disposée, également dans la position de déblocage, dans l'entaille de blocage (13).

3. Raccord de conduite fluidique selon la revendication 1 ou 2,
**caractérisé en ce**
**que** l'entretoise de blocage (15) s'étend en partant d'un plan central longitudinal (16) dans la direction périphérique (9) des deux côtés sur plus de 90°, dans lequel une hauteur d'entretoise (18) mesurée de manière radiale est réduite dans des sections d'extrémité d'entretoise (19), qui s'étendent sur plus de 90°, ou diminue en direction d'une extrémité d'entretoise (20).

4. Raccord de conduite fluidique selon l'une quelconque des revendications 1 à 3, **caractérisé en ce**
- **que** la tubulure (5) présente au niveau de son côté extérieur (11) un contour d'introduction (21) s'étendant dans la direction périphérique (9),
- **que** l'attache de blocage (6) est configurée radialement de manière élastique de telle manière que la tubulure (5) peut être emboîtée dans le corps tubulaire (4) lorsque l'attache de blocage (6) est ajustée dans la position de blocage, en particulier de telle manière que l'entretoise de blocage (15) est repoussée de manière radiale vers l'extérieur par le contour d'introduction (21) lorsque la tubulure (5) est emboîtée dans le corps tubulaire (4) avant d'atteindre une profondeur d'emboîtement prédéfinie et s'enclenche de manière autonome dans la rainure de blocage (12) lorsque la profondeur d'emboîtement prédéfinie est atteinte.

5. Raccord de conduite fluidique selon l'une quelconque des revendications 1 à 4, **caractérisé en ce**
**que** le corps tubulaire (4) présente au niveau de son côté extérieur (26) deux encoches de désenclenchement (27), qui s'étendent de manière axiale et avec lesquelles respectivement une extrémité périphérique (28) de l'attache de blocage (6) vient en prise de manière radiale dans sa position de déblocage.

6. Raccord de conduite fluidique selon l'une quelconque des revendications 1 à 5, **caractérisé en ce**
**que** l'entretoise de blocage (15) présente dans la direction périphérique (9) au moins une interruption d'entretoise (23) ou au moins une entaille d'entretoise (24) radiale.

7. Raccord de conduite fluidique selon l'une quelconque des revendications 1 à 6, **caractérisé en ce**
- **que** l'entaille de blocage (13) présente une interruption d'entaille (29), qui est disposée au centre entre des extrémités périphériques (30) de l'entaille de blocage (13),
- **que** l'entretoise de blocage (15) présente, en complément de l'interruption d'entaille (29), une interruption d'entretoise (31),
- **que** l'interruption d'entaille (29) vient en prise de manière radiale avec l'interruption d'entretoise (31) afin de réaliser un blocage anti-rotation entre l'attache de blocage (6) et le corps tubulaire (4).

8. Raccord de conduite fluidique selon l'une quelconque des revendications 1 à 7, **caractérisé en ce**
**qu'**au moins un joint d'étanchéité radial (34) est prévu entre un côté intérieur (35) du corps tubulaire (4) et le côté extérieur (11) de la tubulure (5).

9. Raccord de conduite fluidique selon la revendication 8,
**caractérisé en ce**
- **que** le corps tubulaire (4) présente, de manière axialement adjacente par rapport à un joint d'étanchéité radial (34) de ce type, une entaille de positionnement (36) s'étendant dans la direction périphérique (9),
- **que** l'attache de blocage (6) présente, au niveau de son côté intérieur (14), à distance axialement de l'entretoise de blocage (15), une entretoise de positionnement (37) dépassant de manière radiale vers l'intérieur, laquelle fait saillie, dans la position de blocage, à travers l'entaille de positionnement (36) de manière radiale au-delà du côté intérieur (35) du corps tubulaire (4) et forme une butée axiale (38) pour le joint d'étanchéité radial (34).

10. Raccord de conduite fluidique selon l'une quelconque des revendications 1 à 9, **caractérisé en ce**
**que** l'attache de blocage (6) présente, au niveau de ses extrémités périphériques (28), respectivement un élément de saisie (39) servant à ajuster manuellement l'attache de blocage (6) dans sa position de déblocage.

11. Raccord de conduite fluidique selon l'une quelconque des revendications 1 à 10, **caractérisé en ce**
**que** l'entretoise de blocage (15) et l'entaille de blocage (13) s'étendent dans la direction périphérique (9) respectivement sur moins de 360°, tandis que la rainure de blocage (12) s'étend dans la direction périphérique (9) sur 360°.

12. Raccord de conduite fluidique selon l'une quelconque des revendications 1 à 11, **caractérisé en ce**
**que** le corps tubulaire (4) est formé d'un seul tenant au niveau du premier composant (2).

13. Raccord de conduite fluidique selon l'une quelconque des revendications 1 à 12, **caractérisé en ce**
**que** la tubulure (5) est formée d'un seul tenant au niveau du deuxième composant (3).

14. Dispositif de charge, en particulier turbocompresseur à gaz d'échappement, pour une installation d'air frais d'un moteur à combustion interne, avec une entrée de compresseur et avec une sortie de compresseur, dans lequel l'entrée de compresseur ou la sortie de compresseur présente un raccord de conduite fluidique (1) selon l'une quelconque des revendications 1 à 13 ou dans lequel l'entrée de compresseur et la sortie de compresseur présentent respectivement un raccord de conduite fluidique (1) selon l'une quelconque des revendications 1 à 13.

15. Conduite d'air frais d'une installation d'air frais d'un moteur à combustion interne, qui présente, au niveau d'au moins une de ses extrémités, un raccord de conduite fluidique (1) selon l'une quelconque des revendications 1 à 13.
